# EUROPEAN PATENT APPLICATION

(11) **EP 1 063 188 A2**
(43) Date of publication of application: **27.12.2000**
(21) Application number: 00110076.7
(22) Date of filing: 12.05.2000
(51) Int. Cl.: B65H 19/29

(54) **Vacuum conveyor**

(30) Priority: 25.06.1999 DE 29910850 U
(71) Applicant: Voith Paper Patent GmbH, 89522 Heidenheim (DE)
(72) Inventor: Broom, Allan, Coquitlam, B.C. (CA); Kutak-Petrik, George, Port Coquitlam, B.C. (CA)
(74) Representative: Manitz, Finsterwald & Partner

(57) **Abstract**

A vacuum conveyor, which is suitable for guiding a running web, e.g. paper web, in particular a threading tall (e.g. during "threading" of a paper or board web into a machine for the production or finishing or processing of such a web) is described. The vacuum conveyor has the following characteristics:
a) an air-pervious endless conveyor belt is tensioned over two pulleys and comprises a conveying run and a return run;
b) in the loop of the conveyor belt is located (apart from the said pulleys) a suction box that is connected via an air flow path to a source of vacuum;
c) at least one of the pulleys can be driven, to allow the endless conveyor belt to travel over the pulleys and over the suction box, whereby the vacuum propagates through the conveying run of the conveyor belt running in the direction of web travel, in order to draw the web to be guided onto the conveyor belt by suction; and
d) the air flow path, from the suction box to the source of vacuum, runs through the return run of the conveyor belt.

## Description

The invention relates to a vacuum conveyor with the characteristics stated in the preamble of claim 1. Such a conveyor is known from DE 26 36 887 (File PD 10778). Conveyors of this kind have proven successful in operation. In many applications, however, a disturbing factor is that with the known conveyor the connection for the vacuum pipe is arranged at one of the side walls of the suction box. Such an arrangement of the vacuum connection seems suitable because only the two side walls of the suction box are free outwards, i.e. are accessible directly from outside. In most cases the two pulleys over which the endless conveyor belt runs, and the suction box located in between, fill the interior space of the endless conveyor belt almost completely.

Overall, the following demands are made on an improved version of the vacuum conveyor:
A) The vacuum conveyor should be suitable for as many different installation situations as possible and also be capable of being used in particularly restricted spaces. More precisely: the maximum construction width, including the vacuum connections should, if possible, be only little larger than the width of the web to be carried, especially the width of the threading tail named in claim 1 (order of magnitude 0.1 to 0.4 m).
B) The tendency for dirt particles or similar materials to collect during operation at the conveyor belt and/or in the suction box should be reduced.

The invention is based on the problem of further developing the known vacuum conveyor in such a way that as many of the stated demands as possible are met.

This problem is solved as claimed in claim 1 in an unusual way, namely by drawing off the air by suction (for the purpose of generating a vacuum in the suction box) through the return run of the conveyor belt. Although the design work required for the vacuum connection is slightly greater than previously, the considerable advantage achieved is that the vacuum connection requires no additional construction space over the width of the conveyor. This makes the conveyor more universally applicable than in the past, and even if only relatively little space is available; it is also more easily accessible than before.

A further advantage of the solution in accordance with the invention consists in that the air flow through the suction box and through the vacuum connection is without any deflection to the side. This makes it possible for the air flow to remove any existing dirt particles from the conveyor more reliably than in the past. In particular, the tendency for dirt to collect inside the suction box is reduced. The pores of the conveyor belt are kept free from dust deposits in a better way than before. All in all, a continuous self-cleaning effect is achieved.

In the area of the return run of the conveyor belt a relatively large flow cross-section can be provided between the suction box and the external vacuum piping (that is, e.g., in the so-called suction nozzle provided as per claim 2). Therefore, thanks to the invention, it is possible to generate a higher vacuum than before in the suction box, without consuming more power.

A further characteristic feature of the vacuum conveyor of the invention is the novel type of supporting means which connects the suction box with the suction nozzle mentioned in claim 2. It should be noted that - according to the invention - the supporting means grips around the edges of the return run of the belt (claim 3).

Various types of sealing elements may be used at the exhaust opening of the suction box and/or around the air flow path going through the supporting means (claim 4).

Those sealings might be helpful to avoid an undesired inflow of secondary air into the suction nozzle. However, sliding friction would result from the sliding motion of the belt over the sealings. In order to solve this problem, the following improvement were found:
A. A small gap may be formed between the suction box and the inner side of the belt's return run with said gap being free of any sealing means (claim 6),
B. Two roll-type sealing elements which extend across the belt travel direction are arranged between the supporting means and the belts return run (claim 7, 8 and 9).

Further advantageous features of the invention are indicated in other sub-claims. In accordance with claims 11 and 12, it is planned that the suction nozzle, without the suction pipe or together with the suction pipe, should perform a double function. It is used both to exhaust the air and also to carry the conveyor, i.e. to fasten the conveyor to a machine frame, rack or similar structure.

Some embodiments of the invention are described with the help of the drawings.
- FIGURE 1: shows a vacuum conveyor partly in side view elevation, partly in cross-section;
- FIGURE 2: shows a cross-section along line II-II of FIGURE 1;
- FIGURE 3: shows a further improved vacuum conveyor partly in a side view partly in a longitudinal section;
- FIGURE 4: is a cross-section along line IV of Figure 3.

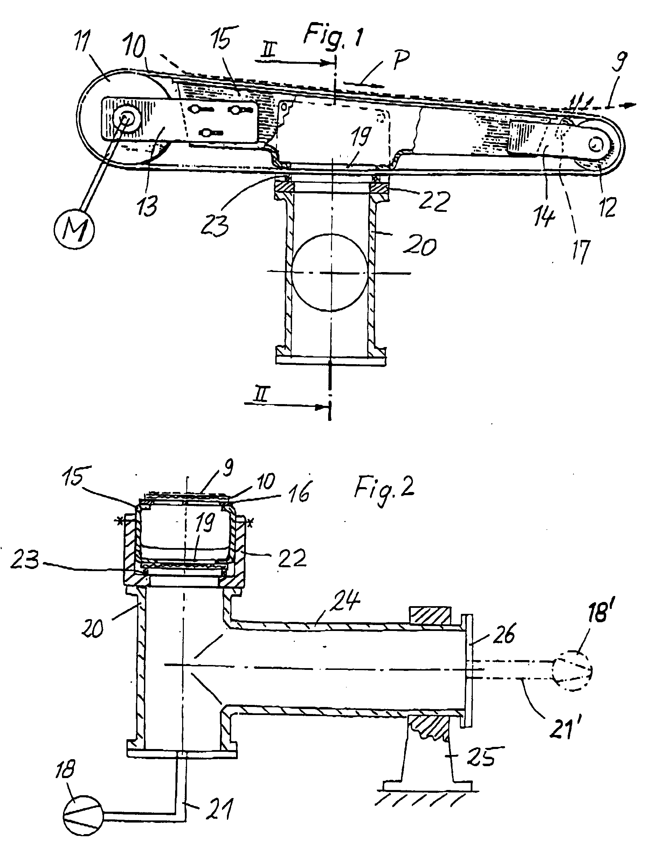

The vacuum conveyor shown in FIGURES 1 and 2 is used to guide a running web, in particular a threading tail 9. This is, as is known, part of a running web, e.g. of a paper or board web, and is used for the 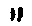 threading" of the web, e.g. inside a papermaking machine.

The conveyor includes an air-pervious, endless conveyor belt 10, which runs over two pulleys 11, 12 and over a suction box 15. The two pulleys 11, 12 are rotatably mounted in holders 13, 14, which are fastened to the suction box 15. One of the pulleys (11) is provided with a drive, which is shown only diagrammatically in FIGURE 1.

The conveying run of the conveyor belt 10 running in the direction of web travel (as shown by arrow P) is in the present case the upper run; an opposite arrangement is also possible. Suction box 15 has a cover plate 16 provided with slots (or similar openings). Sliding on this plate is the conveying run of the air-pervious conveyor belt 10; due to this, web 9 is sucked onto the conveyor belt and transported. For further guiding of web 9 an air blow nozzle 17 can be provided at the end of the conveyor.

The following is provided for connection of the suction box 15 to a source of vacuum 18; in the area of the return run (in the present case of the lower run) suction box 15 has a relatively large exhaust opening 19 or, for example, a large number of exhaust slots. The return run of the conveyor belt 10 slides over this part of the suction box 15 (or over sealing strips fitted there, not shown). Provided outside of the loop of the conveyor belt 10 is a suction nozzle 20 open towards exhaust opening 19. This is connected to the source of vacuum 18 via a vacuum pipe 21. The vacuum therefore propagates over the suction nozzle 20 and through the return run of the conveyor belt to the interior of the suction box 15.

There are several possibilities of rigidly connecting suction nozzle 20 and suction box 15 to each other. Conceivable are, for example, several supporting pins, which are anchored on the side walls of suction box 15 and on suction nozzle 20. In this case sealing strips are arranged at suction nozzle 20, over which conveyor belt 10 slides. Preference is, however, given to the illustrated type of construction with a U-shaped supporting means 22, which grips around the edges of the return run of the conveyor belt 10. The legs of the supporting means 22 projecting (in the present case) upwards are screwed to the side walls of suction box 15. The base of the U-shaped supporting means 22 has a large-area suction opening. At this point supporting means 22 is connected to suction nozzle 20 and carries sealing elements, e.g. sealing strips 23, over which conveyor belt 10 slides. By means of these U-shaped supporting means 22 a very rigid connection is created between suction nozzle 20 and suction box 15. This makes it possible for suction nozzle 20 to carry the entire vacuum conveyor, so that the otherwise customary supporting means can be omitted. For example, a horizontal supporting arm 24 is fastened to or moulded on suction nozzle 20, whose free end is clamped into a machine frame 25.

Pipe 21 leading to the source of vacuum 18 (as shown in full lines) can be connected directly underneath exhaust opening 19 to suction nozzle 20, There is, however, also a possibility (shown in dot-dash-lines) of connecting the vacuum source 18' via pipe 21' (e.g. at a flange 26) to supporting arm 24, if this is designed as a hollow carrier open to suction nozzle 20.

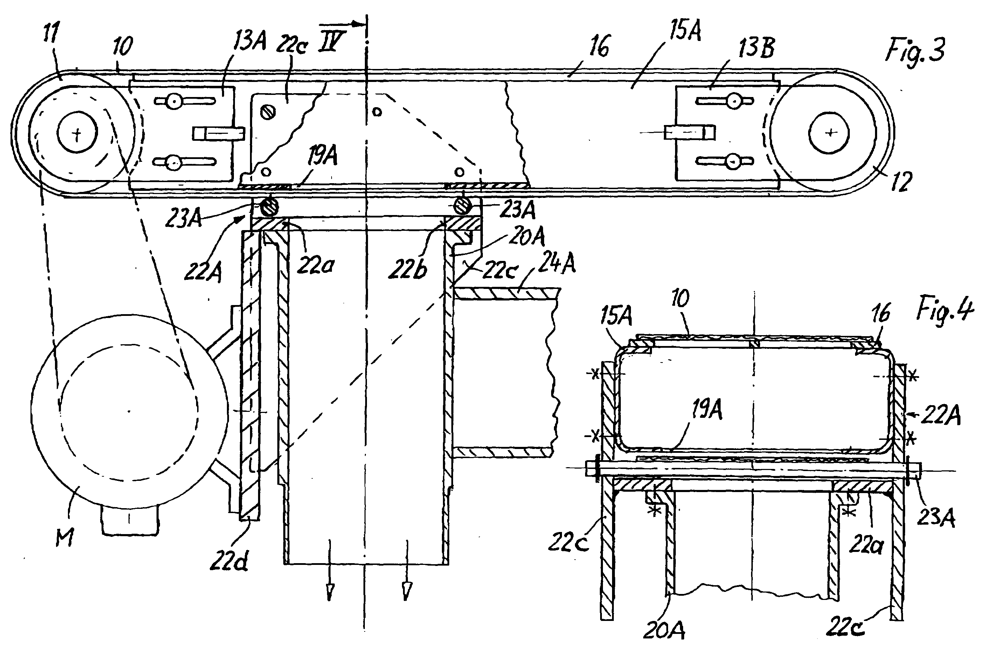

FIGURE 3 shows again an endless belt 10, two pulleys 11, 12 (of equal size), holders 13A and 13B and a suction box 15A with cover plate 16. A supporting means 22A which connects the suction box 15A with suction nozzle 20A comprises a plate 22a and two side walls 22c. Plate 22a is parallel to belt 10 and has an exhaust opening 22b. Connected to supporting means 22A is a base plate 22d for an electric motor M driving pulley 11.

The small gap between the bottom of suction box 15A and the inner side of the return run of belt 10 may be free of sealing elements. Preferably, the only sealing elements 23A are two rotatable cylindrical rolls extending across the belt travel direction. They may be arranged as to contact the outside of belt 10 but to avoid contact to plate 22a.

## Claims

1. Vacuum conveyor, which is suitable for guiding a running web (9), e.g. paper web, in particular a threading tail (e.g. during 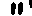 threading" of a paper or board web into a machine for the production or finishing or processing of such a web), with the following characteristics:
a) an air-pervious endless conveyor belt (10) is tensioned over two pulleys (11, 12) and comprises a conveying run and a return run;
b) in the loop of the conveyor belt (10) is located (apart from the said pulleys) a suction box (15) that is connected via an air flow path to a source of vacuum (18);
c) at least one of the pulleys can be driven, to allow the endless conveyor belt (10) to travel over the pulleys (11, 12) and over the suction box (15), whereby the vacuum propagates through the conveying run of the conveyor belt running in the direction of web travel, in order to draw the web to be guided onto the conveyor belt by suction;
d) characterized in that the air flow path (19, 20), from the suction box (15) to the source of vacuum (18), runs through the return run of the conveyor belt (10).

2. Vacuum conveyor as claimed in claim 1, characterized by the following features:
a) the suction box (15) has at least one exhaust opening (19) open towards the return run of the conveyor belt;
b) provided outside of the loop of the conveyor belt (10) is a suction nozzle (20) open to the said exhaust opening (19), a vacuum pipe (21) being connected to the suction nozzle.

3. Vacuum conveyor as claimed in claim 2, characterized in that suction nozzle (20) and suction box (15) are rigidly connected to each other, with the help of a supporting means (22), which grips around the edges of the return run of the conveyor belt (10).

4. Vacuum conveyor as claimed in claim 2 or 3, characterized in that at the exhaust opening (19) of the suction box (15) and/or at the suction nozzle (20) and/or at the supporting means (22) sealing elements (23) are provided, over which the conveyor belt (10) slides.

5. Vacuum conveyor as claimed in claim 4 characterized by the following features:
a) the supporting means (22A) comprises a plate (22a) extending parallell to the outside of the return run of belt (10) and having an exhaust opening (22b) which at least approximately coincides with the exhaust opening (19) of suction box (15);
b) the supporting means (22A) also comprises a sealing means (23A) arranged between the plate (22a) and the return run of belt (10).

6. Vacuum conveyor as claimed in claim 5, wherein a gap is formed between the suction box (15) and the inner side of the return run of belt (10), characterized in that said gap is free of any sealing means.

7. Vacuum conveyor as claimed in claim 5 or 6 characterized by the following features:
a) the sealing means (23A) comprises two rotatable sealing elements, each being formed as a cylindrical roll;
b) said sealing elements extend across the travelling direction of the return run of belt (10);
c) referring to the travel direction of the return run of belt (10), one of said sealing elements is arranged in front of the exhaust opening of the supporting means (22A), while the other of said sealing elements is behind said exhaust opening.

8. Vacuum conveyor as claimed in claim 7, characterized in that the rotatable sealing elements are arranged in a position which allows a contact of the sealing elements with the outside of the return run of the belt (10) and which avoids a contact between the sealing elements and the plate (22a).

9. Vacuum conveyor as claimed in claim 7 or claim 8, characterized in that the two rotating sealing elements are the only sealing means present in the area of the air-flow path from the suction box (15) to the suction nozzle (20).

10. Vacuum conveyor as claimed in claim 3, characterized in that the supporting means (22A) comprises a support (22d) for a drive (M) driving one of said pulleys.

11. Vacuum conveyor as claimed in one of claims 2 to 4, characterized in that the suction nozzle (20) is designed as part of an assembly (20, 24, 25) supporting the entire vacuum conveyor.

12. Vacuum conveyor as claimed in claim 11, characterized in that also a part (24) of the vacuum piping, which connects the suction nozzle (20) to the source of vacuum (18), is an integral part of the assembly (20, 24, 25) carrying the vacuum conveyor.
